# EUROPÄISCHE PATENTANMELDUNG

(11) **EP 1 764 664 A2**
(43) Veröffentlichungstag der Anmeldung: **21.03.2007**
(21) Anmeldenummer: 06009808.4
(22) Anmeldetag: 12.05.2006
(51) Int. Cl.: G05B 19/05

(54) **Sicherheitseinrichtung für eine Windenergieanlage**

(30) Priorität: 15.09.2005 DE 202005014629 U
(71) Anmelder: W2E Wind to Energy GmbH, 18230 Ostseebad Rerik (DE)
(72) Erfinder: Schütt, Dr. Torsten, 18198 Stäbelow (DE)
(74) Vertreter: Siekmann, Gunnar

(57) **Zusammenfassung**

Die Erfindung betrifft eine Sicherheitseinrichtung für eine Windenergieanlage, mit einer elektrischen Schaltung, die einen Eingangsbereich zum Anschluß von Grenzwertmeldem sowie einen Ausgangsbereich zum Anschluß von Schutzeinrichtungen aufweist. Die elektrische Schaltung weist eine frei konfigurierbare Logikeinheit auf, die boolesche Verknüpfungen und Verzögerungen ausbildet. Die Logikeinheit weist eine den Eingangsbereich mit dem Ausgangsbereich verbindende Matrixschaltung auf.

## Beschreibung

Die Erfindung betrifft eine Sicherheitseinrichtung für eine Windenergieanlage mit einer elektrischen Schaltung, die einen Eingangsbereich zum Anschluß von Grenzwertmeldern sowie einen Ausgangsbereich zum Anschluß von Schutzeinrichtungen aufweist.

Jede Windenergieanlage (WEA) verfügt über ein Betriebsführungssystem und eine Sicherheitseinrichtung, die dem Betriebsführungssystem übergeordnet und nicht durch unbefugte Eingriffe oder eine fehlerhafte Bedienung deaktivierbar ist.

Die Schutzeinrichtungen, stellen sicher, daß die Windenergieanlage auch dann in einem sicheren Zustand verbleibt, wenn Störungen auftreten, das Betriebsführungssystem versagt oder fehlerhaft arbeitet. Derartige Schutzeinrichtungen sind beispielsweise aerodynamische und/oder mechanische Bremssysteme, Trenneinrichtungen zur Netzabtrennung von Generatoren oder Generator-Umrichter-Systemen, Not-Aus-Schütze sowie Hauptschalter.

Die Sicherheitseinrichtung wird aktiviert, wenn von den Grenzwertmeldern gemeldet wird, daß sicherheitsrelevante Grenzwerte überschritten werden oder das Betriebsführungssystem die Führung der Windenergieanlage verliert und diese nicht im zulässigen Betriebsbereich halten kann.

Eine bekannte elektrische Schaltung ist die sogenannte Sicherheitskette. Die Sicherheitskette ist eine zentrale Einrichtung der Windenergieanlage, welche die Schutzeinrichtungen bei Überschreitung sicherheitsrelevanter Grenzwerte unabhängig von dem Betriebsführungssystem auslöst. Die eigentliche Sicher heitskette wird als Kontaktschleife mit einer Vielzahl in Reihe geschalteter Kontakte ausgeführt, denen jeweils ein anderer Grenzwertmelder zugeordnet ist.

Bei den bekannten Sicherheitseinrichtungen besteht der Nachteil darin, daß das Auslösen der Schutzeinrichtungen nicht selektiv erfolgt. Unabhängig davon, welcher Grenzwertmelder eine Überschreitung signalisiert, werden über die Kontaktschleife sämtliche Schutzeinrichtungen aktiviert. Dadurch erfahren bestimmte Bauteile der Windenergieanlage ihre maximale Beanspruchung und damit auch ihren maximalen Verschleiß.

Der Erfindung liegt die Aufgabe zugrunde, eine Sicherheitseinrichtung der eingangs genannten Gattung aufzuzeigen, bei deren Auslösen die Bauteilbeanspruchung maßgeblich reduziert ist.

Diese Aufgabe ist erfindungsgemäß durch eine Sicherheitseinrichtung mit den Merkmalen des Patentanspruches 1 gelöst. Vorteilhafte Weiterbildungen der Erfindung sind in den auf den Patentanspruch 1 rückbezogenen Unteransprüchen angegeben.

Die erfindungsgemäße Sicherheitseinrichtung zeichnet sich dadurch aus, daß die elektrische Schaltung eine frei konfigurierbare Logikeinheit aufweist. Die Logikeinheit ist auf der Basis vordefinierter Logikbausteine konfigurierbar. Die die Schutzeinrichtungen aktivierenden Grenzwertmelder sind einzeln und parallel an dem Eingangsbereich des Sicherheitssystems anschließbar. Die Schutzeinrichtungen, die durch das Sicherheitssystem ausgelöst werden, sind hingegen einzeln und parallel an den Ausgangsbereich des Sicherheitssystems anschließbar.

Mit der Logikeinheit besteht somit die Möglichkeit, selektiv nur diejenige Schutzeinrichtung anzusprechen, die für den jeweiligen Fall auch tatsächlich aktiviert werden muß, so daß im Fehlerfall ein besonders schonender Betrieb der Windenergieanlage erreicht ist.

Damit besteht die Möglichkeit, wahlweise entweder die Lebensdauer bestimmter Anlagenteile und Einrichtungen zu erhöhen oder die Dimensionierung bestimmter Anlagenteile und Einrichtungen zu reduzieren. Im Ergebnis sind die Leistungsfähigkeit, die Betriebssicherheit und die Zuverlässigkeit der erfindungsgemäßen Windenergieanlage deutlich verbessert. Auf aufwendige und komplizierte Sicherheitsketten, welche zwar den geforderten sicherheitstechnischen Anforderungen genügen, jedoch erhöhte Bauteilbelastungen mit sich bringen, kann mit Vorteil verzichtet werden.

Die Logikeinheit bildet die Grenzwertgeber miteinander verbindende mathematische Operatoren aus und ermöglicht somit, daß jede Schutzeinrichtung, einzeln und unabhängig von den jeweils anderen Schutzeinrichtungen, von jedem Grenzwertgeber, einzeln oder gemeinsam von mehreren Grenzwertgebem, ausgelöst werden kann. Derartige Operatoren sind insbesondere boolesche Verknüpfungen und zeitliche Verzögerungen.

Bei dem erfindungsgemäßen Sicherheitssystem, das vorzugsweise als handelsverfügbares Sicherheitsschaltgerät ausgeführt ist, verfügt der Eingangsbereich über mehrere digitale Eingänge und der Ausgangsbereich verfügt über mehrere digitale Ausgänge, so daß optional weitere Grenzwertmelder und Schutzeinrichtungen an das Sicherheitssystem angeschlossen werden können.

Nach einer Weiterbildung der Erfindung sind einzelne Eingänge des Eingangsbereiches über zwangsführte Kontakte an eine Versorgungsleitung angeschlossen. Derartige Kontakte sind bevorzugt zum Anschluß von Grenzwertrneldem geeignet, die als Not-Aus-Melder ausgebildet sind. Die zwangsgeführten Kontakte bewirken, daß das Signal des Not-Aus-Melders, vorzugsweise ein 24 Volt-Gleichstromsignal, sicher übertragen wird.

Nach einer nächsten Weiterbildung der Erfindung sind einzelne Eingänge des Eingangsbereiches über eine Versorgungsleitung an einen Taktgeber angeschlossen, womit diese Eingänge insbesondere zum Anschluß eines einpoligen Grenzwertmelders geeignet sind, der beispielsweise als Drehzahl-Grenzwermelder ausgebildet ist. Der Taktgeber bewirkt, daß bei einem Kurzschluß des Signals des Drehzahl-Grenzwertmelders mit einem anderen Signal, beispielsweise mit einem 24-Volt-Gleichstromsignal ein Fehler detektiert wird und das Sicherheitssystem ausgelöst wird.

Um möglichen Fehlschaltungen der erfindungsgemäßen Sicherheitseinrichtung entgegen zu wirken, ist vorgesehen, daß die Logikeinheit einzelne Ausgänge des Ausgangsbereiches mit einzelnen Eingängen des Einganges verbindende Versorgungsleitungen aufweist. Die Versorgungsleitungen sind Steuerleitungen, denen vorzugsweise eine Spannungsversorgung von 24 Volt Gleichstrom zugeordnet ist.

Nach einer besonders vorteilhaften Weiterbildung der Erfindung weist die Logikeinheit eine den Eingangsbereich mit dem Ausgangsbereich verbindende Matrixschaltung auf. Die Matrixschaltung ist eine integrierte Schaltung, bei der untereinander gleiche Logikbausteine oder Logikbausteingruppen wie die Elemente einer Matrix in Zeilen und Spalten angeordnet sind und über entsprechende Zuleitungen mit den Eingängen und Ausgängen verbunden sind. Die Logikeinheit kann selbstverständlich auch andere Schaltungssysteme aufweisen, welche frei konfigurierbar sind.

Selbständiger Schutz wird für eine Windenergieanlage beansprucht, die mit der erfindungsgemäßen Sicherheitseinrichtung ausgerüstet ist. Selbstverständlich liegt es ebenfalls im Rahmen der Erfindung, ganze Windparks mit der erfindungsgemäßen Sicherheitseinrichtung auszurüsten.

Ein Ausführungsbeispiel der Erfindung, aus dem sich weitere erfinderische Merkmale ergeben, ist in der Zeichnung dargestellt. Es zeigen:
- Fig. 1:: ein Funktionsschaubild der erfindungsgemäßen Sicherheitseinrichtung,
- Fig. 2:: ein Schaltungsdetail zum Anschluß eines ersten Grenzwertmelders an die Sicherheitseinrichtung gemäß Fig. 1,
- Fig. 3:: ein Schaltungsdetail zum Anschluß eines zweiten Grenzwertmeiders an die Sicherheitseinrichtung gemäß Fig. 1,
- Fig. 4:: eine Kontrollschaltung der Sicherheitseinrichtung gemäß Fig. 1 in einem ersten Ausführungsbeispiel, und
- Fig. 5:: eine Kontrollschaltung der Sicherheitseinrichtung gemäß Fig. 1 in einem zweiten Ausführungsbeispiel.

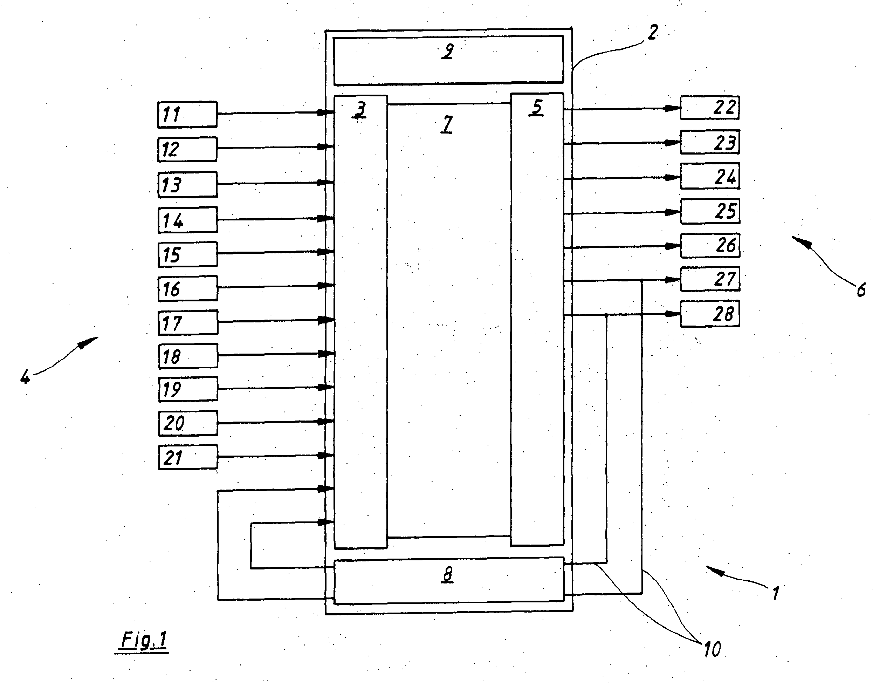

Die Fig. 1 zeigt ein Funktionsschaubild der erfindungsgemäßen Sicherheitseinrichtung 1 mit einer Logikeinheit 2, die einen Eingansbereich 3 zum Anschluß von Grenzwertmeldern 4 sowie einen Ausgangsbereich 5 zum Anschluß von Schutzeinrichtungen 6 aufweist. Der Eingangsbereich 3 und der Ausgangsbereich 5 sind über eine Matrixschaltung 7 miteinander verbunden. Außerdem weist die Logikeinheit 2 eine Kontrollschaltung 8 sowie eine Einrichtung 9 zum Starten bzw. zum Rücksetzen der Sicherheitseinrichtung 1 auf. Die Kontrollschaltung 8 weist einzelne Ausgänge des Ausgangsbereiches 5 mit einzelnen Eingängen des Eingangsbereichs 3 verbindende Versorgungsleitungen 10 auf, an denen ein Gleichstrom mit einer Spannung von 24 Volt anliegt. Die Grenzwertmelder 4 sind im einzelnen ein Not-Aus-Melder,11, ein Drehzahl-Grenzwertmelder 12, ein Vibrations-Grenzwertmelder 13, ein Wirkleistungs-Grenzwertmelder 14, ein Hauptschalter-Auslösemelder 15, ein Pitch-System-Fehlermelder 16, ein Betriebsführungssystem-Melder 17, ein Hermetik-Schutzmelder 18, ein Öldruck-Grenzwertmelder 19, ein Brandmelder 20 sowie ein Kabelverdrillungsmelder 21. Die Schutzeinrichtungen 6 sind im einzelnen ein Not-Aus-Schütz 22, ein Pitchsystem 23, eine mechanische Bremse 24, eine Windnachführung 25, ein Hauptschalter 26, ein Leistungsschalter 27 sowie eine Umrichterabtrennung 28.

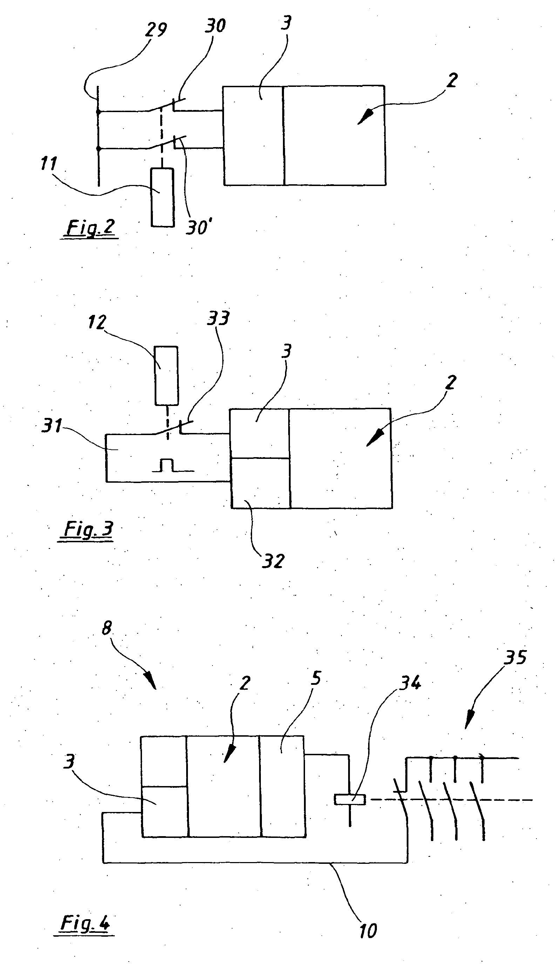

Die Figur 2 zeigt ein Schaltungsdetail zum zweipoligen Anschluß einer Versorgungsleitung 29 an den Eingangsbereich 3. An der Versorgungsleitung 29 liegen ebenfalls 24 Volt Gleichstrom an. Der zweipolige Anschluß weist zwei zwangsgeführte Kontakte 30, 30' auf, die an den Not-Aus-Melder 11 angeschlossen sind.

Die Figur 3 zeigt ein Schaltungsdetail zum einpoligen Anschluß einer Versorgungsleitung 31 an den Eingangsbereich 3. Der einpolige Anschluß weist einen Taktgeber 32 sowie einen Kontakt 33 auf, der an dem Drehzahl-Grenwertmelder 12 angeschlossen ist.

Die Figur 4 zeigt eine Detailansicht der Kontrollschaltung 8 in einem ersten Ausführungsbeispiel. Ein Ausgang des Ausgangsbereichs 5 steuert ein Relais 34 mit zwangsgeführten Kontakten 35 an. Um den Schaltzustand des Ausganges bzw. des Relais 34 zu kontrollieren, ist einer der Kontakte 35 über die Versorgungsleitung 10 an einen Eingang des Eingangsbereiches 3 angeschlossen. Die Logikeinheit 2 schaltet im Fehlerfall den betreffenden Ausgang des Ausgangsbereichs 5 ab.

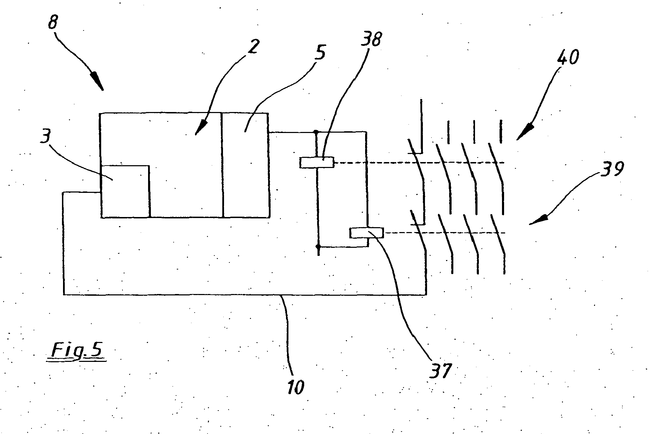

Die Figur 5 zeigt eine Detailansicht der Kontrollschaltung 8 in einem zweiten Ausführungsbeispiel. Ein Ausgang des Ausgangsbereichs 5 steuert zwei Relais 37, 38 mit zwangsgeführten Kontakten 39, 40 an. Um den Schaltzustand des Ausganges bzw. der Relais 37, 38 zu kontrollieren, sind zwei der Kontakte 39, 40 über die Versorgungsleitung 10 an einen Eingang des Eingangsbereiches 3 angeschlossen. Die Logikeinheit 2 schaltet im Fehlerfall den betreffenden Ausgang des Ausgangsbereichs 5 ab.

## Patentansprüche

1. Sicherheitseinrichtung für eine Windenergieanlage, mit einer elektrischen Schaltung, die einen Eingangsbereich zum Anschluß von Grenzwertmeldern sowie einen Ausgangsbereich zum Anschluß von Schutzeinrichtungen aufweist,
**dadurch gekennzeichnet,**
**daß** die elektrische Schaltung eine frei konfigurierbare Logikeinheit (2) aufweist.

2. Sicherheitseinrichtung nach Anspruch 1, **dadurch gekennzeichnet, daß** die Logikeinheit (2) boolesche Verknüpfungen und Verzögerungen ausbildet.

3. Sicherheitseinrichtung nach einem der Ansprüche 1 und 2, **dadurch gekennzeichnet, daß** der Eingangsbereich (3) mehrere Eingänge aufweist.

4. Sicherheitseinrichtung nach einem der Ansprüche 1 bis 3, **dadurch gekennzeichnet, daß** der Ausgangsbereich (5) mehrere Ausgänge aufweist.

5. Sicherheitseinrichtung nach einem der Ansprüche 1 bis 4, **dadurch gekennzeichnet, daß** einzelne Eingänge des Eingangsbereiches (3) über zwangsgeführte Kontakte (30, 30') an eine Versorgungsleitung (29) angeschlossen sind.

6. Sicherheitseinrichtung nach einem der Ansprüche 1 bis 5, **dadurch gekennzeichnet, daß** einzelne Eingänge des Eingangsbereiches (3) über eine Versorgungsleitung (31) an einen Taktgeber (32) angeschlossen sind.

7. Sicherheitseinrichtung nach einem der Ansprüche 1 bis 6, **dadurch gekennzeichnet, daß** die Logikeinheit (2) einzelne Ausgänge des Ausgangsbereiches (5) mit einzelnen Eingängen des Eingangsbereiches (3) verbindende Versorgungsleitungen (10) aufweist.

8. Sicherheitseinrichtung nach einem der Ansprüche 1 bis 7, **dadurch gekennzeichnet, daß** die Logikeinheit (2) eine den Eingangsbereich (3) mit dem Ausgangsbereich (5) verbindende Matrixschaltung (7) aufweist.

9. Windenergieanlage mit einer Sicherheitseinrichtung nach einem der Ansprüche 1 bis 8.
